(19) Europäisches Patentamt

European Patent Office

Office européen des brevets

(11) EP 2 017 098 A2

(12) DEMANDE DE BREVET EUROPEEN

(43) Date de publication:
21.01.2009 Bulletin 2009/04

(51) Int Cl.:
B60G 11/16 (2006.01)      B60G 15/06 (2006.01)
F16F 1/12 (2006.01)

(21) Numéro de dépôt: 08012845.7

(22) Date de dépôt: 16.07.2008

(84) Etats contractants désignés:
AT BE BG CH CY CZ DE DK EE ES FI FR GB GR
HR HU IE IS IT LI LT LU LV MC MT NL NO PL PT
RO SE SI SK TR
Etats d'extension désignés:
AL BA MK RS

(30) Priorité: 20.07.2007 FR 0705283

(71) Demandeur: anvis SD France S.A.S.
58302 Decize Cedex (FR)

(72) Inventeurs:
• Duval, Philippe
59552 Lambres les Douai (FR)
• Sauvage, Gilles
60500 Vineuil St. Firmin (FR)
• Moronval, Marc
60270 Govieux (FR)
• Charette, Christian
03400 Yseure (FR)

(74) Mandataire: Schmid, Nils T.F.
Forrester & Boehmert
Anwaltssozietät
Pettenkoferstrasse 20-22
80336 München (DE)

(54) **Système ressort coupelle**

(57) Association d'un ressort de compression avec l'une ou l'autre de ses coupelles d'appui, appelé « système ressort coupelle », comportant au moins 3 zones d'appui particulières, caractérisée en ce que lesdites zones d'appui sont disposées là où le ressort s'appuie naturellement et sont compressibles.

Fig. 6

**Description**

La présente invention concerne les ressorts de compression et plus particulièrement la conception des appuis inférieurs et/ou supérieurs des ressorts de suspension, tant côté coupelles d'appui que spires terminales des ressorts concernés. Elle a pour but d'améliorer la tenue en fatigue de ce type de ressort en concevant une interface ressort-coupelle telle que la transition entre les spires dites « mortes » et les spires dites « actives » se fasse avec une discontinuité de contrainte et d'énergie accumulée la plus faible possible en flexion. Au-delà des ressorts de suspension elle est aussi applicable à tous types de ressorts de compression travaillant en fatigue entre deux coupelles d'appui.

Il est connu que les ressorts de suspension hélicoïdaux en acier d'une automobile sont disposés entre deux coupelles d'appui ; l'une inférieure fixée sur le corps de l'amortisseur ou sur le bras de suspension, l'autre supérieure liée à la caisse ou au bras de suspension supérieur. Ces coupelles présentent des formes et des inclinaisons très variables d'un constructeur à l'autre. Elles sont le plus souvent en tôle emboutie ou en aluminium, et elles sont parfois garnies d'un intercalaire en caoutchouc ou polyuréthane pour amortir et filtrer les vibrations. Les extrémités du ressort sont quant à elles soit nues soit garnies d'une gaine tubulaire en thermoplastique destinée à éviter des problèmes de corrosion potentiels dans certaines applications. Dans ce qui suit on utilisera le terme « choc » pour définir la position de compression maximale du ressort, le terme « rebond » pour définir la position de compression minimale du ressort, le terme « course » pour définir le trajet en compression ou détente du ressort entre les positions choc et rebond.. Les zones d'appuis des ressorts de suspension sur leur coupelles définissent grosso modo les zones de spires dites « mortes », par opposition aux autres spires dites « utiles ». La barre d'acier enroulée en hélice pour former le ressort est appelée « fil » dans ce qui suit.

**Problème industriel posé :**

Les ressorts de suspension ne s'appuient jamais de façon continue avec une densité de pression constante sur leurs coupelles ; les contacts d'un ressort hélicoïdal sur sa coupelle se font de façon ponctuelles et non de façon continue. Lorsque la charge appliquée au ressort est proche de zéro le contact se fait par les 2 extrémités du fil ; puis au fur et à mesure que la charge augmente une deuxième zone de contact du fil du ressort avec la coupelle en vis-à-vis apparaît, le plus souvent entre 140 et 180° de la première zone d'appui en extrémité. Entre ces deux zones le fil décolle très légèrement de la coupelle, de quelques dixièmes de mm jusqu'à 2,5 mm dans le pire des cas. Ce phénomène est dû à la courbure hélicoïdale du fil du ressort et au fait que la force exercée sur le ressort ne passe pas dans l'axe du fil. La torsion du fil sur lui-même pendant la compression du ressort et le moment de basculement dû à l'excentration de la force exercée sur le ressort provoquent ce phénomène de soulèvement du fil entre deux zones d'appui consécutives. Dans ce qui suit on appellera ce soulèvement « pontet »

Lorsque la charge exercée sur le ressort continue de progresser une troisième et parfois une quatrième zone de contact fil-coupelle apparaît d'où un deuxième et un éventuel troisième pontet

Ces pontets sont parfois utilisés pour définir la ligne d'action du ressort. Le barycentre de ces points d'appui pondéré par la pression exercée en chacun de ces points sur une coupelle donnée permet de définir un des points de la ligne d'action du ressort, l'autre point de la ligne d'action étant donné par le barycentre des appuis sur l'autre coupelle. Mais ces pontets sont gênants à deux titres : A) ils changent d'amplitude en fonction du chargement du ressort, on dit qu'ils « respirent », ce qui provoque parfois de la bruyance due aux claquements du fil sur les coupelles. Cet inconvénient est résolu le plus souvent par l'interposition entre fil du ressort et coupelle métallique d'une gaine ou d'un intercalaire thermoplastique. B) ils provoquent une discontinuité importante dans la contrainte de flexion du fil et, dans une moindre mesure, dans celle de torsion. Ce deuxième inconvénient n'a jamais été résolu. La conséquence est que lors du chargement croissant du ressort l'énergie accumulée par le fil en flexion cesse de progresser dans la zone de fil située entre l'appui de son extrémité et le dernier appui ponctuel ; par contre juste après ce dernier appui l'énergie continue de s'accumuler en flexion quand la charge augmente. Le dernier appui ponctuel du ressort représente un point singulier qui côté extrémité du ressort a un niveau d'énergie quasi constant alors que de l'autre côté la variation d'énergie en flexion est directement proportionnelle à la charge appliquée au ressort. Entre choc et rebond les mouvements de flexion du fil sont concentrés dans la zone située juste après le dernier appui ponctuel, au lieu d'être progressif. On réunit ainsi les conditions optimales pour que le fil casse à cet endroit et c'est d'ailleurs bien ce qui se passe sur véhicule puisque plus de 90% des casses de ressort ont lieu dans cette zone. En torsion la variation de contrainte est un peu plus progressive car la fil continue à se tordre sur lui-même, même entre deux appuis ponctuels. Certes cette torsion est freinée par le frottement de contact sur les appuis mais elle a lieu quand même partiellement. La zone de fil située entre l'extrémité du ressort et le dernier appui ponctuel est appelé spire morte. Cette définition n'est pas très appropriée car cette zone de fil n'est pas vraiment morte. De plus on voit que cette notion de spire morte n'est pas très précise et qu'elle recouvre en réalité deux notions : la partie dite morte en torsion et la partie dite morte en flexion. Ces deux zones ne sont en réalité pas identiques, tant en longueur affectée qu'en variation d'énergie. La discontinuité d'accumulation d'énergie en flexion est très préjudiciable pour la tenue en fatigue du ressort car cette dernière est fonction non seulement de la contrainte maxi atteinte mais aussi de l'amplitude de variation sous charge de contrainte dans une zone donnée ; la criticité étant souvent donnée par la formule

$$PSWT = (0,5 \ \ x \ \ sigma \ max \ \ x \ \ (sigma \ max - sigma \ min) \ )^{0,5}$$

Les sigma max et sigma min étant respectivement les contraintes maximale et minimale dans une zone donnée. Cette formule montre que l'amplitude de la variation de contrainte entre sigma max et sigma min est aussi importante en terme de criticité que la contrainte maximale sigma max prise isolément.

**Résumé de la présente invention et principales revendications**

La présente invention consiste à concevoir et disposer sur les coupelles d'appui inférieures et /ou supérieures des ressorts de suspension, avant et /ou arrières, au moins 3 appuis élastiques compressibles disposés aux endroits où le ressort prend naturellement appui quand la coupelle ne dispose pas de la présente invention, tels que l'on minimise les effets de pontets et que la contrainte de flexion continue de progresser dans la zone habituellement qualifiée de « morte » alors que le dernier contact ponctuel du ressort avec sa coupelle a eu lieu

Un autre avantage de la présente invention est que le ressort travaillant dans de meilleures conditions on minimise les risques de rupture ce qui peut être mis à profit soit pour augmenter la marge de sécurité soit pour accroitre la contrainte moyenne en service

Un autre avantage étant aussi que l'utilisation de la matière étant optimisée cela se traduit par un pourcentage de spires dites mortes moins élevé ce qui permet de gagner en encombrement nécessaire du ressort pour une même quantité d'énergie à emmagasiner.

Elle est caractérisée par la définition des longueurs et des raideurs des appuis ponctuels du ressort sur ses coupelles telle que chaque appui élastique ajouté sur la coupelle n'est pas rigide mais s'enfonce sous charge avec une amplitude telle qu'il retarde la création du pontet suivant et en minimise sa flèche.

Elle est également caractérisée par le fait que les appuis successifs présentent une raideur en compression croissante, le premier appui qui est le moins raide correspondant à l'extrémité du fil ou au départ du pas positif si il s'agit d'un ressort ayant un bout de pas négatif en premier.

Elle est également caractérisée par le fait que sur le dernier appui ponctuel compté depuis l'extrémité du ressort et créé à l'interface ressort-coupelle lors de la compression du ressort, la variation d'énergie accumulée en flexion existe également côté spire « morte » quand le ressort est comprimé entre rebond et choc

Elle est également caractérisée par le fait que sur un ensemble ressort - coupelles bénéficiant de la présente invention le calcul à postériori du nombre de spires « utiles » à partir des résultats d'essais de compression sur presse donne par déduction un nombre de spires mortes inférieur d'au moins 30% à celui qu'il aurait été pour le même ressort sur les mêmes coupelles sans que ces dernières soient équipées d'appuis localisés élastiques en compression

Elle est également caractérisée par le fait que la tenue en fatigue de systèmes ressorts - coupelles bénéficiant de la présente invention est au moins 20% supérieure à celle des mêmes systèmes qui ne bénéficierait pas de la présente invention, toutes autres dimensions et conditions d'essais restant égales par ailleurs

Elle est également caractérisée par le fait que la nature de l'élastomère utilisé pour réaliser ces appuis ainsi que le coefficient de forme desdits appuis sont conçus pour que la raideur et aussi la variabilité de raideur de ces appuis est choisie pour satisfaire les objectifs cidessus

Elle est également caractérisée par le fait qu'on peut appliquer la présente invention à l'une ou l'autre des extrémités du ressort, ou aux deux extrémités

Dans ce qui suit on parlera souvent de système ressort-coupelle car la présence d'appuis compressibles se fait à l'interface entre ressort et coupelle ; les appuis eux-mêmes étant le plus souvent solidaires de la coupelle mais pouvant aussi être surmoulés ou collés sur le fil du ressort

**Etat de l'art actuel et idées similaires ou antériorités**

Le principe des appuis élastiques à l'interface ressort - coupelles est connu mais il a été développé dans un but tout à fait différent et avec une conception ne répondant ni aux revendications présentées ni ne permettant de réaliser tout ou partie de ces revendications. Les objectifs poursuivis par les brevets ci après étaient soit de bien localiser les appuis ponctuels pour mieux maîtriser la ligne d'action du ressort, soit étaient de mieux filtrer les vibrations, soient d'éviter des problèmes de corrosion très localisés dus à un appui ponctuel agressif.

Le brevet US6149171 publié le 21/11/2000 propose une coupelle élastomère ou plastique comportant une série de cannelures destinées à répartir plus uniformément la pression du ressort sous ladite coupelle et surtout à interrompre le cheminement vibratoire grâce à toutes ces rainures rendant l'appui discontinu. Il n'y est pas question de rechercher une durée de vie améliorée pour le ressort ou une diminution du nombre de spires mortes.

Le brevet US2005051937 propose un fil de ressort pour lequel au voisinage de l'extrémité on a créé volontairement ledit pontet en tordant localement le fil de façon à mieux anticiper et maîtriser les points d'appui donc le barycentre des efforts et en conséquence la ligne d'action. Notre présente invention n'a pas pour but de s'occuper de la ligne d'action et ne nécessite pas à priori une forme particulière de développée pour le fil.

Le brevet JP2004162901 propose une gaine présentant des plots permettant de surélever l'appui du ressort par rapport à sa coupelle. Le but est ici d'éviter la stagnation de l'eau sur la coupelle et de choisir les points d'appui du ressort sur sa coupelle en fonction de la ligne d'action recherchée. Avec ce brevet JP2004162901 on ne se préoccupe pas du tout d'améliorer la tenue en fatigue des ressorts ou de limiter le volume nécessaire en diminuant le nombre de spires mortes

**Description**

La figure 1 représente une spire d'extrémité d'un ressort comprimé suivant son axe Z et en appui sur la coupelle correspondante, dans le cas habituel ne bénéficiant pas de la présente invention

La figure 2 est une coupe selon A-A de la figure 1, approximativement au milieu du premier pontet, et montrant l'élévation selon l'axe Z de la spire du ressort dans différents cas de chargement

La figure 3 représente la développée du fil du ressort ainsi que les appuis ponctuels et les densités de pression correspondantes

La figure 4 est une variante de la figure 3 dans le cas d'un ressort commençant par une petite portion de pas négatif

La figure 5 compare pour un même ressort en appui sur sa coupelle la déformation du fil dans la zone d'appui selon que les appuis ponctuels sur la coupelle sont rigides ou bénéficient de la présente invention

La figure 6 représente une coupelle d'appui ressort équipée de 3 appuis élastiques selon la présente invention

La figure 7 est une variante de la figure 6

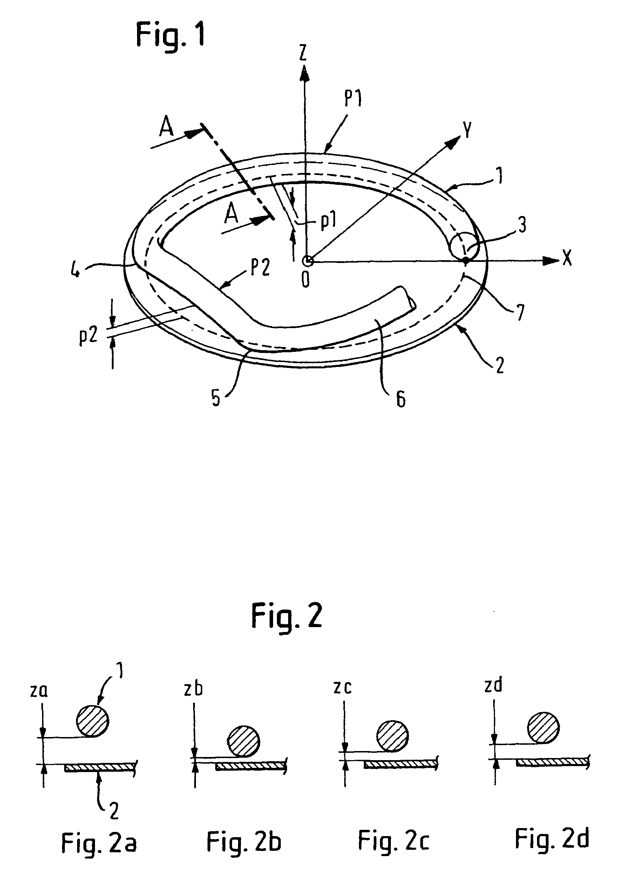

Dans la figure 1 on a cherché à montrer le phénomène de pontet qui existe presque obligatoirement sur les appuis des ressorts de compression, qu'il s'agisse de ressorts de suspension ou de tout autre ressort de compression à usage mécanique. Le fil 1 s'appuie sur la coupelle 2 en trois endroits respectivement notés 3, 4 et 5. Le repère 3 est en même temps l'extrémité du fil 1. Le repère 6 correspond à la montée hélicoïdale du fil autour de l'axe Z. Entre les appuis 3 et 4 se trouve le premier pontet P1. Au milieu approximativement de ce pontet P1 le fil 1 du ressort ne touche plus la coupelle 2. Entre la trace 7 en pointillée qui correspond à la projection suivant Z de la spire d'appui sur la coupelle 2 et le fil du ressort existe un jeu noté p1 au niveau de ce pontet P1, ce jeu p1 étant mesuré parallèlement à l'axe Z. Ce jeu est nul aux extrémités en appui respectivement 3 et 4. Pour un ressort de suspension ce jeu est variable avec la charge de compression du ressort et se situe en général entre quelques dixièmes de mm et environ 2 mm. Entre les appuis 4 et 5 se trouve le deuxième pontet P2 qui présente un jeu central noté p2. Pour les ressorts de suspension le deuxième appui noté 4 se situe généralement entre 150 et 190° comptés dans le sens trigonométrique à partir de l'axe X. Cet angle peut varier légèrement pendant la compression et il y aura lieu d'en tenir compte pour la suite si on veut aménager une zone d'appui spécifique. Le troisième appui repéré 5 se situe généralement entre 220 et 300° à partir de l'axe X

La figure 2 montre l'évolution de l'élévation suivant Z du jeu entre le fil 1 et la coupelle 2 au niveau de la coupe A-A de la figure 1. L'étape représentée en figure 2a correspond à la mise en place du ressort sur sa coupelle 2, le ressort n'étant alors quasiment pas comprimé. Le seul point d'appui du ressort sur sa coupelle est le point 3 qui représente le début du fil. Le jeu indiqué za , mesuré suivant l'axe Z, dépend du pas du ressort à l'état libre. Au fur et à mesure que la compression du ressort suivant son axe Z augmente ce jeu initial za diminue pour atteindre une valeur zb en figure 2b : zb peut parfois prendre temporairement une valeur nulle. Le fil du ressort étant courbe et la force exercée sur le ressort n'étant pas à la verticale du fil mais suivant l'axe Z le ressort a besoin de trouver un deuxième point d'appui, qui sera le repère 5 de la figure 1. Dès que le deuxième appui 5 du fil sur la coupelle 2 apparaît le jeu zb ré-augmente en général pour prendre la valeur zc de la disposition 2c. Quand on arrive à la position choc, c'est-à-dire en compression maximale de fonctionnement du ressort, le jeu devient zd. Si on poursuit la compression du ressort jusqu'à spires jointives ce jeu zd peut s'annuler sous l'influence de la compression des spires les unes sur les autres. Quand la charge exercée sur le ressort suivant l'axe Z varie entre son maximum, correspondant à la hauteur dite « choc » et son minimum , correspondant à la hauteur dite « rebond », le jeu au niveau du pontet passe entre son minimum zb et son maximum zd de façon pas toujours linéaire. En dynamique il arrive que le jeu s'annule en choc et le fil vient alors taper sur la coupelle d'où de la bruyance.

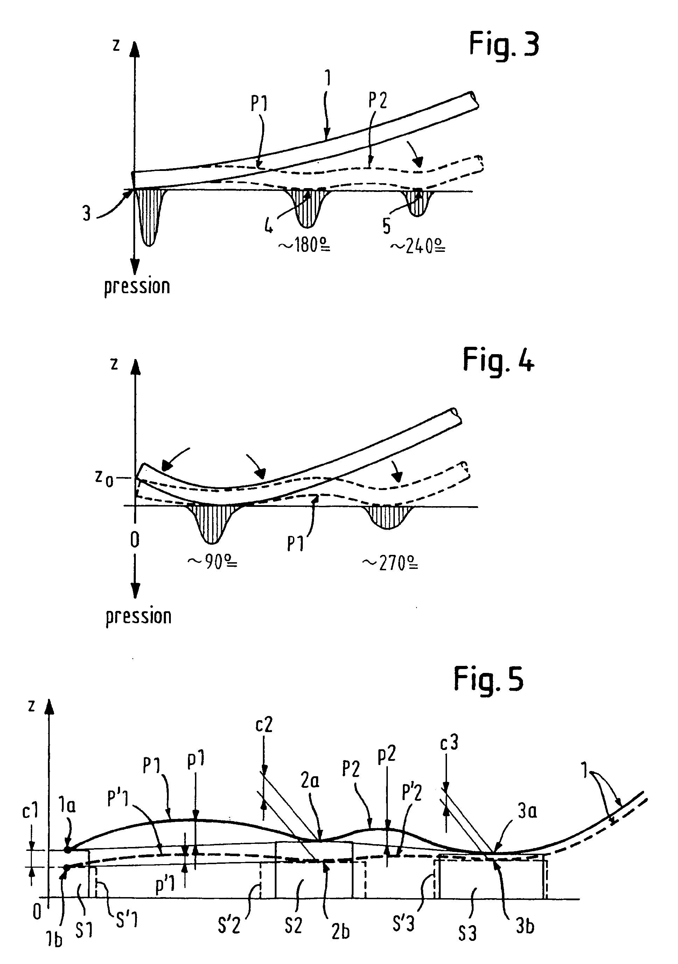

La figure 3 montre la création des pontets pendant la déformation du fil, le ressort étant ici représenté en développée. L'axe z est une parallèle à Z mais passant par l'extrémité 3 du fil et en abscisse on a l'angle correspondant à la longueur curviligne développée du fil. Les pressions exercées par le fil sur la coupelle sont indiquées par des zones hachurées dont l'amplitude selon un axe opposé à z est proportionnelle à ladite pression. On voit notamment que sous un état de charge donné les pressions d'appui aux appuis respectivement 3, 4 et 5 ne sont pas identiques.

La figure 4 est similaire à la figure 3 mais concerne le cas d'un ressort dit à « démarrage à pas négatif ». Là aussi le fil 1, au lieu de s'appliquer sans jeu sur la coupelle, ne vient appuyer que dans des zones bien précises et ménage ainsi entre deux appuis un pontet P1

La figure 5 montre ce phénomène de pontet dans le cas d'un système ressort-coupelle suivant la présente invention c'est-à-dire avec des appuis élastiques en compression là où le ressort s'appuie sur la coupelle. Le fil 1 du ressort est représenté sous la forme de sa développée comme dans les figures 3 ou 4. En traits pleins le fil 1 prend la forme qu'il aurait si les appuis S1, S2 et S3 étaient rigides. En traits discontinus c'est la forme que prend le fil après écrasement de ces 3 appuis sous l'effet de la compression axiale du ressort. L'appui S1 se comprime d'une valeur C1 et se déforme pour prendre l'allure S'1. L'appui S2 se comprime d'une valeur C2 et se déforme pour prendre l'allure S'2. L'appui S3 se comprime d'une valeur C3 et se déforme pour prendre l'allure S'3. Les valeurs C1, C2 et C3 sont fonctions de l'élastomère utilisé et de sa forme. Ces paramètres sont choisis pour que les courses de compression C1, C2 et C3 soient progressivement décroissantes et pour que le rayon de courbure du fil 1 dans le plan du dessin soit le plus grand possible au voisinage du dernier appui, ici au voisinage du point d'appui 3b. La décroissance des courses de compression C1, C2 et C3 permet de diminuer les flèches p1 et p2 qui caractérisent l'importance des pontets respectivement P1 et P2. Le ressort comprimé s'appuie à l'équilibre en 1b, 2b et 3b sur ses appuis S'1, S'2 et S'3 respectivement. Dans cet état d'équilibre il comporte toujours des pontets mais ayant des flèches plus réduites respectivement p'1 et p'2. dans cette figure 5 la flèche p'2 n'a pas été représentée car voisine de zéro. Quand on commence à comprimer un ressort depuis sa position rebond il s'appuie relativement vite en 2 et le plus souvent 3 points sur ses coupelles. Le travail en fatigue se faisant entre choc et rebond il se fait en majorité dans une situation où le fil est représenté en pointillé comme dans la figure 5. Au voisinage du dernier appui, ici en 3b sur l'appui S'3, la courbure du fil dans le plan de la figure reste réduite. Quand la charge augmente sur le ressort les appuis précédents, ici en l'occurrence S'2 et S'1, leurs raideurs plus faibles que celle de l'appui S'3 fait qu'ils s'enfoncent davantage ce qui préserve l'apparition d'un pontet P'2 trop important. Les variations de courbure du fil au niveau du dernier appui sont donc réduites. Une partie du travail de flexion du fil permet d'accumuler une énergie dans la zone de fil située entre les appuis 1b et 3b. La discontinuité d'accumulation d'énergie au voisinage et de part et d'autre de l'appui 3b est réduite par rapport à une solution ne bénéficiant pas de la présente invention. En limitant cette discontinuité d'accumulation d'énergie on minimise l'effet de pseudo encastrement de la spire dite morte qui fait que la plupart des ressorts cassent juste après le dernier appui. Si on numérote les appuis de 1 à N, l'appui 1 étant le premier à l'extrémité du fil, c'est en permettant à l'appui N-1 de se comprimer et se détendre plus facilement qu'en N qu'on peut augmenter le rayon de courbure du fil au voisinage de N et diminuer la variation d'énergie emmagasinée entre une position juste avant et une juste après l'appui N.

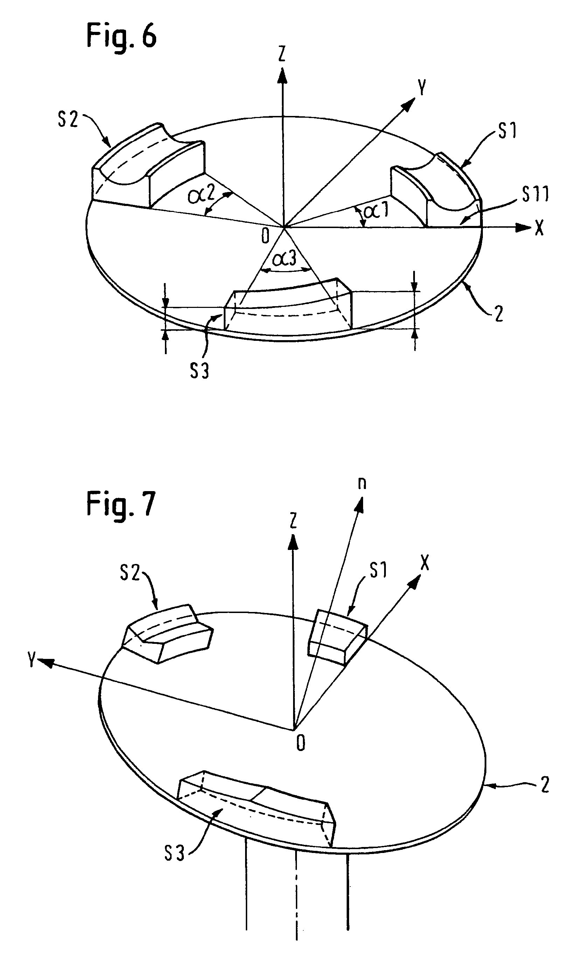

La figure 6 montre une vue de dessus en perspective d'une coupelle 2 sur laquelle sont disposés 3 appuis S1, S2 et S3. Ces appuis peuvent être collés, surmoulés ou clipsés à la coupelle 2. Ils peuvent aussi faire partie intégrante de la coupelle 2 si celle-ci est en élastomère ou dans une matière plastique. Comme on peut le voir sur cette figure la forme des appuis ainsi que leur hauteur et longueur peuvent être variable. Le dessus de ces appuis peut être plan horizontal ou incliné, ou pourvu d'une gorge de centrage. Le choix de ces formes dépend de la développée des ressorts et de leur mode de centrage sur la coupelle. Le centreur et les éventuels rebords de coupelle n'ont pas été représentés ici car indépendants de la présente invention. Le repère S11 correspond au bout du premier appui S1, là où s'appuie l'extrémité du fil du ressort dès le début de la compression. La longueur curviligne des 3 appuis S1, S2 et S3 est représentée de façon angulaire par les angles α1, α2 et α3. Cette longueur est telle que lors de la compression du ressort on puisse prendre en contact une petite migration angulaire des zones d'appui du ressort et éviter ainsi qu'un appui du ressort se fasse directement sur la coupelle.

La figure 7 représente un autre mode de réalisation de la présente invention appliqué au cas d'une coupelle inclinée. L'axe Z est ici l'axe de l'amortisseur dans le cas d'une application aux suspensions avant, ou l'axe selon lequel se fait le mouvement de compression du ressort pour toute autre application. L'appui S2 présente une face supérieure en V destinée à mieux centrer le fil. L'appui S3 présente une surface supérieure avec deux pentes. Ces dispositions particulières de forme d'appui supérieur, connues depuis longtemps, sont tout à fait applicables avec la présente invention.

## Revendications

1. Association d'un ressort de compression avec l'une ou l'autre de ses coupelles d'appui, appelé « système ressort coupelle », comportant au moins 3 zones d'appui particulières, **caractérisée en ce que** lesdites zones d'appui sont disposées là où le ressort s'appuie naturellement et sont compressibles.

**2.** Système ressort - coupelle selon revendication 1 **caractérisé en ce que** la raideur en compression des appuis est choisie de façon à obtenir le plus grand rayon de courbure possible du fil du ressort au voisinage du dernier appui compté à partir de l'extrémité du fil.

**3.** Système ressort coupelle selon revendication 1 **caractérisé en ce que** la raideur en compression des appuis est croissante du premier appui correspondant à l'extrémité du fil du ressort au dernier appui sur la coupelle.

**4.** Système ressort coupelle selon l'une quelconque des revendications précédentes **caractérisé en ce que** la longueur de ces appuis compressibles est optimisée pour tenir compte des éventuelles migrations de zone d'appui du ressort lorsque la charge à laquelle il est soumis varie.

**5.** Système ressort coupelle selon revendication 4 **caractérisé en ce que** la raideur en compression d'un appui quelconque est choisie pour minimiser la flèche du pontet qui se produit entre cet appui et l'appui suivant.

**6.** Système ressort coupelle selon revendication 5 **caractérisé en ce que** le nombre de spires mortes d'un ressort bénéficiant de la présente invention est inférieur d'au moins 30% à celui du même ressort dans un système ressort coupelle ne bénéficiant pas de la présente invention.

**7.** Système ressort coupelle selon revendication 6 **caractérisé en ce que** la tenue en fatigue du ressort est supérieure d'au moins 20% à celui du même ressort dans un système ressort coupelle ne bénéficiant pas de la présente invention.

**8.** Système ressort coupelle selon revendication 5 **caractérisé en ce que** lesdits appuis peuvent être solidaires de la coupelle.

**9.** Système ressort coupelle selon revendication 5 **caractérisé en ce que** lesdits appuis peuvent être solidaires du ressort.

**10.** Système ressort coupelle selon l'une quelconque des revendications précédentes **caractérisé en ce qu'**il peut affecter l'une ou l'autre ou les deux coupelles.

## Fig. 1

## Fig. 2

Fig. 2a    Fig. 2b    Fig. 2c    Fig. 2d

# Fig. 3

z

P1  1  P2

3

4  ~180°  5  ~240°

pression

# Fig. 4

z

z0

0

P1

~90°  ~270°

pression

# Fig. 5

z

c2

c3

P1  p1  2a  P2  p2  3a  1

c1  1a  P'1  P'2

p'1

0  1b  S1  S'1  S'2  S2  2b  S'3  S3  3b

## Fig. 6

**RÉFÉRENCES CITÉES DANS LA DESCRIPTION**

**Documents brevets cités dans la description**

- US 6149171 A
- US 2005051937 A
- JP 2004162901 B